# EUROPÄISCHE PATENTSCHRIFT

(11) **EP 2 159 433 B1**
(45) Veröffentlichungstag und Bekanntmachung des Hinweises auf die Patenterteilung: **03.09.2014**
(21) Anmeldenummer: 09405108.3
(22) Anmeldetag: 06.07.2009
(51) Int. Cl.: F16B 37/08, F16B 12/14, F16B 12/30

(54) **Wiederlösbare Befestigungsanordnung**
Releasable fastening assembly
Dispositif de fixation amovible

(30) Priorität: 25.08.2008 CH 13562008
(43) Veröffentlichungstag der Anmeldung: 03.03.2010
(73) Patentinhaber: LOG Produktions AG, 9113 Degersheim (CH)
(72) Erfinder: von Wartburg, Martin, 4147 Aesch (CH)
(74) Vertreter: Gachnang, Hans Rudolf

(56) Entgegenhaltungen:
- WO-A1-03/100267
- DE-A1-102004 052 332
- GB-A- 677 089
- US-A- 2 274 975
- US-A- 2 940 145
- US-A- 3 215 025

## Beschreibung

Gegenstand der Erfindung ist eine wiederlösbare Befestigungsanordnung gemäss Oberbegriff des Patentanspruchs 1.

Modular aufgebaute Büromöbel umfassen jeweils eine Zusammenstellung von gleichen oder ungleichen Elementen, z.B. Würfel, welche mit geeigneten Befestigungsmitteln miteinander verbunden werden müssen, um nicht während deren Benutzung sich gegenseitig zu verschieben. Üblicherweise werden als Befestigungsmittel Schrauben verwendet, welche jeweils vom oberen Element in das untere oder umgekehrt getrieben werden. Dazu können bereits im oberen/unteren Element entsprechende Bohrungen und im unteren/oberen Element entsprechende Gewindehülsen vorgesehen sein. Mit solche präzisen Verbindungsmitteln können die einzelnen Module bzw. Elemente an der ihnen zugedachten Stelle gehalten werden. Nachteilig an diesen Verbindungselementen ist die Tatsache, dass die Schrauben entweder von Hand oder mittels eines elektrischen Schraubers eingedreht werden müssen. Da üblicherweise pro Element mindestens zwei, vorzugsweise aber vier Verschraubungen notwendig sind, ist das Verbinden sehr aufwändig und zeitraubend.

Aus der US 2, 940, 145 ist weiter ein Befestigungselement bekannt, welches aus einem Federstahlstreifen hergestellt ist und zwei ausgestanzte Laschen umfasst, die nach dem u-förmigen Umbiegen des Federstahls und Abkanten der beiden Enden der Kantenbereiche der Schenkel ein in den u-förmigen Bereich eingeschobenes Befestigungselement festhalten können.

Eine Aufgabe der vorliegenden Verbindung besteht nun darin, eine wiederlösbare Befestigungsanordnung zu schaffen, die eine werkzeugfreie Befestigung ermöglicht und, falls später notwendig, jederzeit wieder lösbar und für eine erneute Verbindung verwendbar ist.

Gelöst wird diese Aufgabe durch eine wiederlösbare Befestigungsanordnung gemäss den Merkmalen des Patentanspruchs 1. Vorteilhafte Ausgestaltungen der Erfindung sind in den abhängigen Ansprüchen umschrieben. Die erfindungsgemässe Befestigungsanordnung ermöglicht es, eine Befestigungsschraube ohne eine Drehbewegung in die Mutter einzubringen und ohne weitere Manipulation eine sichere Befestigung zu gewährleisten. Gleichzeitig kann das Befestigungselement, welches aus einer Schraube und einer Mutter besteht, jederzeit mit einem geeigneten Schlüssel, sei es ein Schraubendreher oder ein Imbusschlüssel, wieder gelöst und erneut werkzeugfrei zusammengefügt werden. Durch eine geeignete Ausbildung der Mutter kann diese beispielsweise bei Möbelelementen aus Aluprofilen werkzeugfrei am Profil befestigt werden. Die jeweils am andern Möbelteil angebrachte Schraube ist in einer vorteilhaften Ausgestaltung der Erfindung unverlierbar mit dem Möbelteil verbunden und sie kann werkzeugfrei an diesem angebracht werden. Die Schraube bleibt vor und auch nach dem Wiederlösen einer einmal vorgenommenen Verbindung mit dem Möbelelement unverlierbar verbunden. Die Mutter kann kostengünstig durch einen Stanz- und Biegevorgang erzeugt werden. Im weiteren ist die Mutter derart ausgestaltet, dass keine übermässig präzise Ausrichtung zwischen der Schraube und der Mutter vorzunehmen ist. Seitliche Abweichungen von einigen Millimetern werden ohne Probleme aufgenommen.

Anhand eines Illustrierten Ausführungsbeispiels wird die Erfindung näher erläutert. Es zeigen
- Figur 1: einen Vertikalschnitt durch eine Mutter,
- Figur 2: eine Seitenansicht der Mutter,
- Figur 3: die Mutter nach dem Stanzen aus einem flachen Blech vor dem Biegevorgang,
- Figur 4: eine Aufsicht auf die Mutter gemäss Figur 3, nach dem Biegevorgang,
- Figur 5: einen Axialschnitt durch die Schraube,
- Figur 6: einen Axialschnitt durch den Sicherungsring,
- Figur 7: einen Vertikalschnitt durch die Decke eines unteren Möbelelements und dem Boden eines oberen Möbelelements vor dem Einpressen der Schraube und
- Figur 8: einen Vertikalschnitt durch die Decke eines unteren Möbelelements nach erfolgtem Einpressen der Schraube.

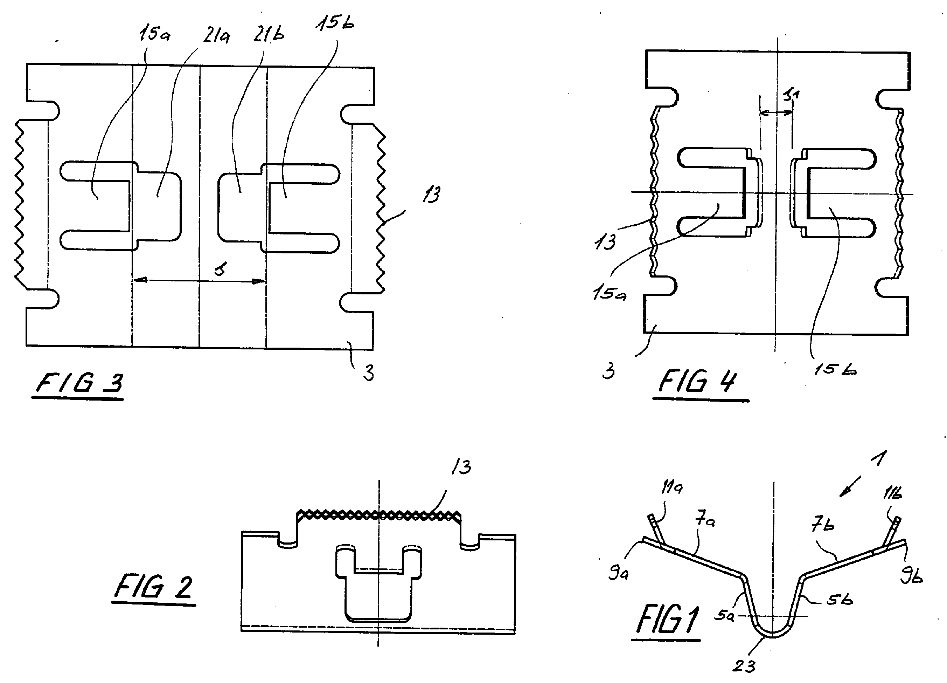

Im Querschnitt der in Figur 1 dargestellten Befestigungsmutter, kurz Mutter 1 genannt, ist deren Geometrie klar ersichtlich. Im zentralen Bereich 23 ist die aus einem Blech 3, vorzugsweise einem Federstahlblech, gestanzte U-Form ersichtlich. An die beiden Schenkel 5a und 5b des Bereichs 23 schliessen in einem stumpfen Winkel von beispielsweise 140° liegende Flügel 7a und 7b an. An deren beiden Aussenkanten 9a und 9b sind nach oben umgebogene Bereiche 11a und 11b angeformt. Die aussen liegenden Kanten der Bereiche 11a und 11b weisen vorzugsweise eine gezackte Kontur 13 auf (vergleiche Figuren 2 bis 4). Die Zacken dienen dazu, die Mutter 1 an der Befestigungsstelle zu sichern.

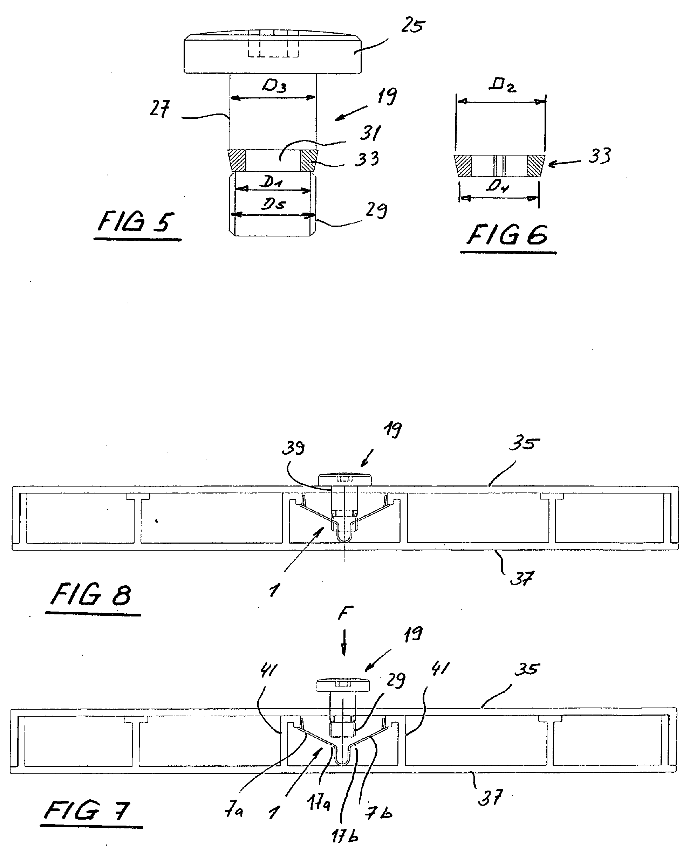

In den beiden Flügeln 7a und 7b sind durch Ausstanzungen zwei Lappen 15a und 15b erzeugt worden, die einander in einem Abstand s gegenüberliegenden Kanten 17a und 17b werden nach dem Umbiegen des Blechs 3 in die flügelartige Gestalt näher aneinander herangeführt und liegen schlussendlich in einem Abstand von s₁. Dieser Abstand s₁ ist kleiner oder gleich dem Kerndurchmesser D₁ einer Schraube 19 (Figur 5).

Vor den beiden Kanten 17a und 17b der Lappen 15a und 15b ist durch die Ausstanzung zudem ein Freiraum 21a und 21b geschaffen worden, welcher später dazu dient, den Schaft der Schraube 19 tief in den u-förmigen Bereich 23 einzuführen.

Das zweite Element des Befestigungselements besteht aus der Schraube 19, die einen Kopf 25, einen Schaft oder Zwischenteil 27 und einen Gewindeabschnitt, kurz Gewinde 29 aufweist. Zwischen dem Schaft 27 und dem Gewinde 29 ist ein Einstich 31 ausgebildet, in welchem ein kegelförmiger Sicherungsring 33 eingesetzt ist. Der Sicherungsring 33 ist vorzugsweise aus Kunststoff hergestellt und dessen Mantelfläche konisch ausgebildet. Der Durchmesser D₂ des Sicherungsrings 33 an seiner breiteren Stelle ist grösser als der Durchmesser D₃ des Schafts 27 der Schraube 19. Der kleinere Durchmesser D₄ am Sicherungsring 33 ist kleiner als der Durchmesser D₅ des Gewindes 29.

Nachfolgend wird der Einsatz der Befestigungsanordnung zur Verbindung des Bodens 35 eines oben liegenden Möbelmoduls mit der Decke 37 eines darunter liegenden Möbelelements beschrieben. In Figur 7 sind die beiden Möbelelemente lose übereinander gestapelt und die Schraube 19 ist durch den Sicherungsring 33 in einer Bohrung 39 am Boden 35 gehalten. In der Decke 37 ist zwischen zwei Stegen 41, deren obere Enden gegeneinander umgebogen sind, die Mutter 1 eingelegt bzw. durch das Einführen eingespannt gehalten. Beim Einschieben (von oben) zwischen die Stege 41 wird die Mutter 1 leicht verformt und die beiden Flügel 7a und 7b werden nach oben gebogen, bevor deren freie Kanten unter den gebogenen Enden der Stege 41 einrasten und so die Mutter 1 am Profil festklemmen.

Wenn durch das Übereinandersetzen der beiden Möbelmodule die Schraube 19 einigermassen genau über der Mutter 1 zu liegen gekommen ist, kann letztere mit einer Kraft F, zum Beispiel mit dem Daumen, nach unten geschoben werden. Beim nach unten Schieben gleiten die Gewindegänge des Gewindes 29 der Schraube 19 zwischen den beiden Kanten 17a und 17b der Lappen 15a und 15b hindurch und drücken letztere leicht auseinander. Durch die Rückstellkraft der beiden federelastischen Lappen 15a und 15b wird die Schraube 19 axial gehalten festgeklemmt. Wird ein Lösen der Schraube 19, d.h. ein Trennen der Möbelmodule erforderlich, so kann die Schraube 19 mit einem geeigneten Schraubendreher, z.B. einem Imbusschlüssel, gelöst werden. Die beiden Kanten 17a und 17b der Lappen 15a und 15b bilden dabei ein "Innengewinde" entlang denen das Gewinde 29 an der Schraube 19 geführt wird.

## Patentansprüche

1. Wiederlösbare Befestigungsanordnung zum Verbinden von übereinander gestapelten Schrankelementen oder - modulen, umfassend eine Befestigungsschraube (19) und eine Mutter (1) mit zwei einander gegenüberliegenden, elastischen Laschen (15a,15b) mit Kanten (17a,17b), deren Abstand s₁ kleiner ist als der Kerndurchmesser D1 des Gewindes (29) an der Schraube (19), wobei die Mutter (1) eine aus Federstahl hergestellte Blechplatte (3) umfasst, aus welcher die beiden einander gegenüberliegenden Laschen (15a,15b) ausgestanzt sind und die Platte (3) zwischen den beiden Laschen (15a,15b) u-förmig gebogen ist und die beiden Laschen (15a,15b) ausserhalb der beiden Schenkel (5a,5b) des u-förmigen Bereichs (23) an zwei nach aussen gebogenen Flügeln (7a,7b) liegen, **dadurch gekennzeichnet, dass** die Schraube (19) zwischen deren Schraubenkopf (25) und dem Gewinde (29) einen zylindrischen Schaft (27) umfasst, dessen Durchmesser (D3) grösser ist als der Durchmesser (D5) des Gewindes (29).

2. Befestigungsanordnung nach Anspruch 1, **dadurch gekennzeichnet, dass** Teile der Aussenkanten (9a,9b) der beiden Flügel (7a,7b) im zentralen Bereich (23) oder in den Randbereichen (11a,11b) stumpfwinklig nach oben umgebogen sind.

3. Befestigungsanordnung nach Anspruch 1, **dadurch gekennzeichnet, dass** zwischen dem zylindrischen Schaft (27) und dem Gewinde (29) ein umlaufender Einstich (31) ausgebildet ist.

4. Befestigungsanordnung nach Anspruch 3, **dadurch gekennzeichnet, dass** im Einstich (31) ein Sicherungsring (33) eingesetzt ist, dessen Mantelfläche zum Gewinde (29) hin konisch verjüngt ausgebildet ist und dessen grösserer Durchmesser (D2) grösser ist als der Durchmesser (D3) des Schafts (27).

## Claims

1. A releasable fastening assembly for connecting wardrobe elements or modules stacked on top of one another, comprising a fastening screw (19) and a nut (1) having two opposing flexible tabs (15a, 15b) with edges (17a, 17b), the spacing s₁ of which is smaller than the core diameter D1 of the thread (29) on the screw (19), wherein the nut (1) comprises a sheet metal plate (3) made of spring steel, from which the two opposing tabs (15a, 15b) are punched out, and the plate (3) is bent in a u-shaped manner between the two tabs (15a, 15b) and, outside of the two limbs (5a, 5b) of the u-shaped region (23), the two tabs (15a, 15b) rest against two wings (7a, 7b) which are bent outwardly, **characterised in that** the screw (19) comprises a cylindrical shank (27) between its screw head (25) and the thread (29), the diameter (D3) of said shank being larger than the diameter (D5) of the thread (29).

2. The fastening assembly according to claim 1, **characterised in that** parts of the outer edges (9a, 9b) of the two wings (7a, 7b) are bent upwardly at an obtuse angle in the central region (23) or in the peripheral regions (11a, 11b).

3. The fastening assembly according to claim 1, **characterised in that** a circumferential recess (31) is formed between the cylindrical shank (27) and the thread (29).

4. The fastening assembly according to claim 3, **characterised in that** a retaining ring (33) is inserted into the recess (31), the surface area of which is formed so as to taper conically towards the thread (29) and the larger diameter (D2) of which is larger than the diameter (D3) of the shank (27).

## Revendications

1. Dispositif de fixation amovible pour le raccordement d'éléments ou de modules d'armoire superposés, comprenant une vis de fixation (19) et un écrou (1) avec deux attaches (15a, 15b) élastiques opposées l'une à l'autre avec des arêtes (17a, 17b) dont l'espacement s₁ est plus petit que le diamètre d'âme D1 du filet (29) sur la vis (19), l'écrou (1) comprenant une plaque en tôle (3) réalisée en acier à ressort à partir de laquelle les deux attaches (15a, 15b) opposées l'une à l'autre sont estampées, et la plaque (3) étant courbée en forme de U entre les deux attaches (15a, 15b), et les deux attaches (15a, 15b) étant situées à l'extérieur des deux branches (5a, 5b) de la zone (23) en forme de U sur deux ailettes (7a, 7b) courbées vers l'extérieur, **caractérisé en ce que** la vis (19) comprend, entre sa tête de vis (25) et le filet (29), une tige (27) cylindrique dont le diamètre (D3) est plus grand que le diamètre (D5) du filet (29).

2. Dispositif de fixation selon la revendication 1, **caractérisé en ce que** des parties des arêtes extérieures (9a, 9b) des deux ailettes (7a, 7b) dans la zone (23) centrale ou dans les zones de bord (11 a, 11 b) sont recourbées vers le haut en formant un angle obtus.

3. Dispositif de fixation selon la revendication 1, **caractérisé en ce que**, entre la tige (27) cylindrique et le filet (29), il est constitué une encoche (31) périphérique.

4. Dispositif de fixation selon la revendication 3, **caractérisé en ce que**, dans l'encoche (31), est inséré un anneau de fixation (33) dont la surface d'enveloppe est constituée en se rétrécissant de façon conique en direction du filet (29) et dont le grand diamètre (D2) est plus grand que le diamètre (D3) de la tige (27).
